# EUROPEAN PATENT APPLICATION

(11) **EP 1 198 135 A1**
(43) Date of publication of application: **17.04.2002**
(21) Application number: 01203004.5
(22) Date of filing: 07.08.2001
(51) Int. Cl.: H04N 7/18, G01P 3/40

(54) **Portable unit for acquisition of high-speed video**

(30) Priority: 28.08.2000 IT LT000010
(71) Applicant: Cortellesi, Alessandro, 00042 Anzio (Roma) (IT)
(72) Inventor: Cortellesi, Alessandro, 00042 Anzio (Roma) (IT)

(57) **Abstract**

An apparatus able to record high-speed movements, developed for in depth use in analysing high-speed unpredictable events that would likewise not be able to be seen by the human eye nor be detected by use of present day traditional video recorders.

Efficient solutions of processing technologies and memorization concepts have contributed to the development of an extremely compact unit with superior and more sophisticated functions than other current on the market systems.

Acquisition and recording of completely digital imagery without use of any type of compression, guarantees the highest quality of details. The ample memory capability allows for safe analysis of unpredictable events, guaranteeing the recording at maximum resolution, up to and after a few hours of the unpredictable event.

Task of present invention is to enable technicians involved in the development and/or refining stage of such electrical and/or mechanical units, to perform in-depth analysis of movements of the parts under observation, by means of rapid mechanical stress.

## Description

The present invention consists of a compact unit used to record high speed movements, developed for in depth use in analysing high speed unpredictable events that would likewise not be able to be seen by the human eye nor be detected by use of present day traditional video recorders.

Efficient solutions of processing technologies and memorization concepts have contributed to the development of an extremely compact unit with superior and more sophisticated functions than other current on the market systems, which take up more space and are more expensive. Also, the actual units have limited recording time (a few seconds), which in most cases is not sufficient time to troubleshoot unpredictable events.

Acquisition and recording of completely digital imagery without use of any type of compression, guarantees the highest quality of details. The ample memory capability allows for safe analysis of unpredictable events, guaranteeing the recording at maximum resolution, up to and after a few hours of the unpredictable event.

Task of present invention is to enable technicians involved in the development and/or refining stage of such electrical and/or mechanical units, to perform in-depth analysis of movements of the parts under observation, by means of rapid mechanical stress. Some possible uses could be:
- Fine tune high volume industrial systems (automatic production lines), more of 10 pieces a second.
- Analysing of mechanical parts while in movement, or during the development stage or the quality control of electrical and/or mechanical machines or motors.
- Physics and chemical experimental laboratories.
This invention consists of an electronic unit, low cost, reliable, compact and portable. It can be used with one or more hard disks, making it possible to digitally memorize a series of images acquired by means of a high-speed digital video camera.

The system is composed of a portable acquisition module, containing a preview display window in order to monitor the view of the video camera and to view the recording.

By means of the buttons on the control panel, it is possible to start the recording (REC), to see the recording (PLAY) or to stop using the "STOP" button. Just as it is on a simple video recorder.

There is also a full 360-degree turning knob, like a jog, that makes it possible to scan in slow motion with preciseness and stability, so the images may be immediately analysed.

The acquisition module, extremely compact, contains all the electronic components for full function of the unit, whereas the video camera is connected to the unit by means of a digital interface.

Once connected to power outlet, the unit is ready for use pressing simple buttons located on the front control panel and integrated display, to begin desired recording.

In case the preview display does not permit a sufficient close-up of desired images, it is possible to connect a standard external monitor for a better view, or to transfer the desired images in standard format to a personal computer.

The system can also be connected to a stroboscopic flash in order to increase and improve quality of lighting and clarity of the image.

The recorded images inside the unit are memorized in one or more hard disks that in turn guarantee their safe storage even when the unit is turned off, and therefore, can be again viewed on the display whenever necessary, or on the external monitor, or as an alternative the images can be transferred to a personal computer by means of an interface RS232 or USB or memorized on external standard flash cards.

Further features and advantages of the invention will be readily apparent from the following detailed description with reference to the accompanying drawing and photo which show some preferred embodiment of the invention by way of a not limiting example.

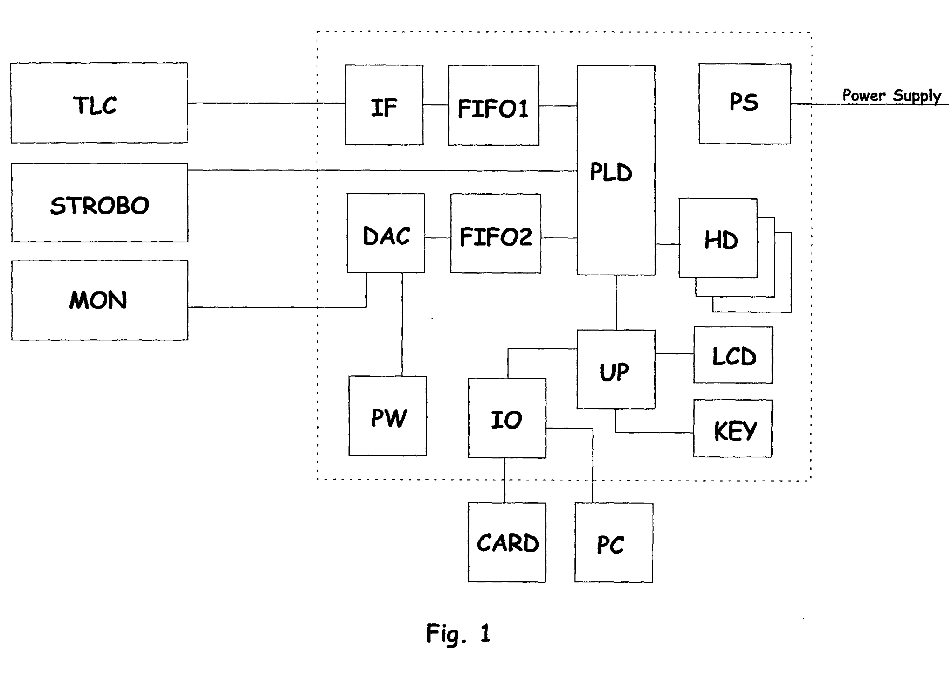

Figure 1 is a diagram of detailed blocks that make up the composition on the system.
By using the digital interface RS422 or LVDS and the digital video camera, data of the images is acquired, a ram (FIFO1) memory, temporarily memorizes the data that comes from the digital inter face (IF).

All the synchronized signals are handled by a (PLD) programmable logic device that runs exactly all the recording functions of the images of the video camera and the reproduction to the display for view.

The PLD directly runs the hard disk for memorization of recorded image data.

By means of a ram (FIFO2) memory, the image data seen is first temporarily memorized before reaching the (DAC) analytical digital video converter that generates the standard video signal that is utilized on the internal display of the unit (PW) and on the external monitor (MON) if connected.

The microprocessor (UP) handles the interface with user by means of (KEY) and the display (LCD) moving the controls selected towards the PLD.

By means of the interface (IO) PCMCIA, RS232 and USB the microprocessor can transfer the image data that has been memorized in the hard disk (HD) towards external standard units such as Personal Computers or Flash Cards.

Lastly, the electricity (PS) supplies all the power necessary for full function.

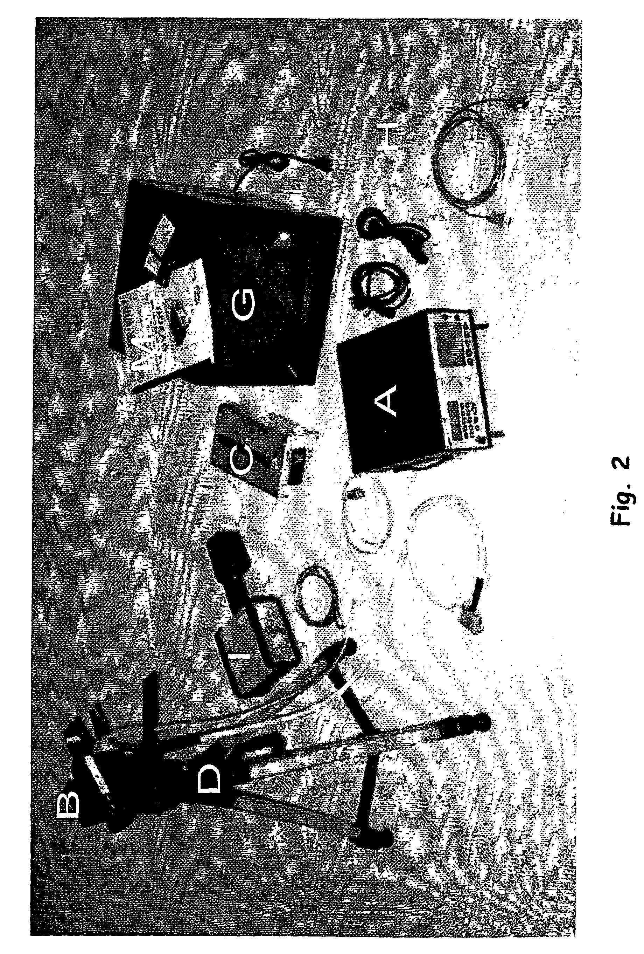

Figure 2 show a complete system that use the apparatus:
A. Acquisition Module
B. Digital Camera
C. Camera Power Supply Unit
D. Camera Tripod
E. Camera power supply cable
F. Camera signal cable
G. Monochrome monitor
H. Monitor signal cable
I. Stroboscopic flash
J. Stroboscopic flash cable
K. Power supply cable
L. Personal computer data transfer cable
M. User manual

## Claims

1. Portable digital unit for high-speed video recording above 60 photograms a second with recording times above 20 minutes.

2. The apparatus according to the claim 1 **characterized in that** allow the analysing unpredictable high-speed events.

3. The apparatus according to the claim 1 **characterized in that** allow analysing material structure under stress or high-speed physical or chemical stress.

4. The apparatus according to the claim 1 **characterized in that** allow the constant visual monitoring of areas that are subject to unpredictable events that rapidly evolves.
